# EUROPÄISCHE PATENTSCHRIFT

(11) **EP 3 615 849 B1**
(45) Veröffentlichungstag und Bekanntmachung des Hinweises auf die Patenterteilung: **08.12.2021**
(21) Anmeldenummer: 18719565.6
(22) Anmeldetag: 24.04.2018
(51) Int. Cl.: F16J 9/06

(54) **ÖLABSTREIFRING-FEDER FÜR EINEN ÖLABSTREIFRING UND ÖLABSTREIFRING**
OIL SCRAPER RING SPRING FOR AN OIL SCRAPER RING AND OIL SCRAPER RING
RESSORT DE SEGMENT RACLEUR D'HUILE POUR UN SEGMENT RACLEUR D'HUILE ET SEGMENT RACLEUR D'HUILE

(30) Priorität: 24.04.2017 DE 102017108683
(43) Veröffentlichungstag der Anmeldung: 04.03.2020
(73) Patentinhaber: Scherdel Innotec Forschungs- Und Entwicklungs GmbH, 95615 Marktredwitz (DE)
(72) Erfinder: MIELKE, Peter, 95632 Wunsiedel (DE); HEINDL, Manuel, 95615 Marktredwitz (DE); ZIMMERMANN, Maik, 95709 Tröstau (DE)
(74) Vertreter: Schmitt-Nilson Schraud Waibel Wohlfrom Patentanwälte Partnerschaft mbB
(86) Internationale Anmeldenummer: PCT/EP2018/060414
(87) Internationale Veröffentlichungsnummer: WO 2018/197450

(56) Entgegenhaltungen:
- EP-A1- 2 365 233
- EP-A1- 2 703 695
- EP-A1- 2 778 481
- JP-A- 2012 233 572

## Beschreibung

Die Erfindung betrifft eine Ölabstreifring-Feder für einen Ölabstreifring, der die Ölabstreifring-Feder, einen oberen und einen unteren Metallring aufweist und zum Montiert-Sein in einer Ölringnut eines Kolbens vorgesehen ist. Die Erfindung betrifft ferner einen entsprechenden Ölabstreifring.

Ölabstreifringe kommen in Verbrennungsmotoren in einer Nut eines Kolbens (Kolbennut) des Verbrennungsmotors angeordnet zum Einsatz und haben die Aufgabe im Betrieb überschüssiges Öl von einer Zylinderinnenwand, bzw. Zylinderlaufbuchsen-Innenwand, abzustreifen. Es ist bekannt, Ölabstreifringe mehrteilig, beispielsweise dreiteilig aus einem oberen Metallring, einem unteren Metallring und einer dazwischen verlaufend angeordneten Ölabstreifring-Feder auszubilden.

Die EP 2 703 695 B1 zeigt eine Ölabstreifring-Feder mit mehreren oberen Bereichen und mehreren unteren Bereichen, die alternierend in einer Umfangsrichtung angeordnet sind, so dass sie einen Abstand in einer Axialrichtung und einen Abstand in der Umfangsrichtung haben. Verbindungsbereiche sind vorgesehen, die jeweils die benachbarten oberen und unteren Bereiche miteinander verbinden. Jeder der oberen und der unteren Bereiche weist einen Nasenabschnitt auf, der am inneren Umfangsende angeordnet ist und dazu ausgebildet ist, den jeweils anliegenden, oberen oder unteren Metallring radial nach außen zu drücken. Der Nasenabschnitt weist eine Durchgangsöffnung auf. Ferner ist an jedem der oberen und unteren Bereiche ein Auflageabschnitt vorgesehen, der sich radial zwischen dem Nasenabschnitt und dem äußeren Umfangsende erstreckt und dazu ausgebildet ist, dass der jeweilige, obere oder untere Metallring darauf aufliegt bzw. daran anliegt. In dem Auflageabschnitt ist eine Vertiefung ausgebildet, die in radialer Richtung der Ölabstreifring-Feder eine konstante Tiefe aufweist.

Im Stand der Technik ist der Öldurchfluss zwischen der Ölabstreifring-Feder und dem oberen bzw. dem unteren Metallring beim Betrieb des Verbrennungsmotors gering, so dass sich dort Rückstände, beispielsweise Verbrennungsrückstände, ansammeln. Durch die Relativbewegungen zwischen der Ölabstreifring-Feder und den Metallringen verursachen diese Rückstände Verschleiß sowohl an den Metallringen als auch an der Ölabstreifring-Feder.

Die JP 2012 233572 A geht von dem Problem aus, ein Anhaften zwischen den Seitenschienen und einem Abstandshalter eines kombinierten Ölrings zu verhindern, und schlägt dafür einen kombinierten Ölring mit ein Paar oberer und unterer Seitenschienen und mit einen dazwischen angeordneten Abstandshalter-Expandervor. Der Abstandshalter-Expander umfasst viele obere und untere Teile die abwechselnd in axialer und Umfangsrichtung angeordnet sind, Verbindungsstücke zum Verbinden der obere und untere Teile, und Nasenabschnitte, die von den inneren Umfangsseitenenden der oberen und unteren Teile zum Drücken der Seitenschienen angehoben sind und Löcher aufweisen.

Es ist daher Aufgabe der vorliegenden Erfindung, eine Ölabstreifring-Feder für einen Ölabstreifring anzugeben, die einen verbesserten Öltransport zwischen der Ölabstreifring-Feder und den Metallringen zur Verfügung stellt.

Eine erfindungsgemäße Ölabstreifring-Feder für einen Ölabstreifring, der die Ölabstreifring-Feder, einen oberen und einen unteren Metallring aufweist und zum Montiert-Sein in einer Ölringnut eines Kolbens vorgesehen ist, weist folgendes auf: mehrere obere Bereiche und mehrere untere Bereiche, die alternierend in einer Umfangsrichtung angeordnet sind, so dass sie einen Abstand in einer Axialrichtung haben; Verbindungsbereiche, die jeweils die benachbarten oberen und unteren Bereiche miteinander verbinden; wobei jeder der oberen und der unteren Bereiche jeweils Folgendes aufweist: einen Nasenabschnitt, der am inneren Umfangsende angeordnet und dazu ausgebildet ist, den jeweils anliegenden, oberen oder unteren Metallring radial nach außen zu drücken, und der eine Durchgangsöffnung aufweist; einen Auflageabschnitt, der sich radial zwischen dem Nasenabschnitt und dem äußeren Umfangsende erstreckt und dazu ausgebildet ist, dass der jeweilige, obere oder untere Metallring darauf aufliegt bzw. daran anliegt; wobei in dem Auflageabschnitt eine Vertiefung ausgebildet ist, deren Tiefe, bezogen auf die Auflagefläche des Auflageabschnitts, in radialer Richtung zu der Durchgangsöffnung hin zunimmt, und/oder deren Breite in radialer Richtung zu der Durchgangsöffnung hin zunimmt.

Während der Auf- und Abbewegung des Kolbens wird das Öl von der Zylinderlaufbuchse abgestreift und nach innen zum radialen Innendurchmesser der Ölabstreifring-Feder geleitet, wo dieses über am Kolben vorgesehene Ölrücklaufbohrungen zurück ins System geführt wird. Hierbei baut sich am radialen Außendurchmesser sowie am Innendurchmesser der Ölabstreifring-Feder ein Öldruck auf, wobei ein Teil des Öls zurück in die eingeprägten Vertiefungen der Feder gelangt und dort der obere bzw. untere Metallring axial in Richtung obere und untere Kolbennutflanken gedrückt wird. Hierdurch ist der jeweilige Metallring in der Lage, die Kolbennut axial vor eventuellen Verbrennungsgasen besser abzudichten. Bei der nächsten Bewegung des Kolbens pumpt der Metallring das Öl wieder aus der Nut, wobei dieses durch die Schrägstellung der Vertiefung leicht zum Innendurchmesser der Ölabstreifring-Feder abfließen kann.

Des Weiteren wird durch diesen erzwungenen Rückfluss des Öls verhindert, dass die Metallringe durch den Kontakt zur Ölabstreifring-Feder die Eigenschaften des Öls mechanisch durch Quetschung verändern können. Dadurch wird verhindert, dass sich im Öl unter dem Metallring Ölkohle bildet, die zum Verkleben, Verklemmen und letztendlich zum Bruch des Systems führen kann. Größere Partikel aufgrund der Reibung werden auf diese Weise ebenfalls abtransportiert.

Zusätzlich kann der oben beschriebene Öldruck am Außen- bzw. Innendurchmesser der Ölabstreifring-Feder durch die Tiefe oder auch den Winkel der Vertiefung, der je nach Erfordernissen aufgrund der Motorlaufeigenschaften zwischen 5° und 30° liegen kann, weiter angepasst bzw. beeinflusst werden.

Bei einer erfindungsgemäßen Ölabstreifring-Feder wirkt die im jeweiligen Auflageabschnitt ausgebildete Vertiefung somit bei einer axialen Bewegung der Ölabstreifring-Feder das Öl in radialer Richtung der Ölabstreifring-Feder fördernd. Dabei wirken die Vertiefungen, deren Tiefe, bezogen auf die Auflagefläche des Auflageabschnitts, in radialer Richtung zu der Durchgangsöffnung hin zunimmt, wie Halbtrichter, die das Öl in Richtung auf ihre geöffnete Seite hin fördern. Die Tiefe bzw. Breite der Vertiefung nimmt dabei auf die Durchgangsöffnung hin zu, so dass sich ein Ölfluss durch die Durchgangsöffnung hindurch ergibt. Im Betrieb wird somit bei auf den Auflageabschnitten der oberen Bereiche und der unteren Bereiche jeweils aufliegenden Metallringen, ein Ölfluss in radialer Richtung zwischen der Ölabstreifring-Feder und den aufliegenden Metallringen hindurch und ein anschließender Ablauf des Öls durch die Durchgangsöffnung erzeugt.

Die erfindungsgemäße Ölabstreifring-Feder erzeugt im Betrieb des Verbrennungsmotors einen verstärkten Ölfluss zwischen der Ölabstreifring-Feder und den angrenzenden Metallringen. Dadurch werden Verbrennungsrückstände aus diesem Bereich mit dem Öl zusammen abgeführt. Ferner wird eine Alterung von Öl bedingt durch einen zu langen Verbleib in diesem Bereich vermieden. Dadurch kann die Reibung zwischen Ring und Feder sowie der daraus resultierende Sekundärverschleiß vermindert und damit die Schadstoffemissionen verbessert werden.

Die erfindungsgemäße Ölabstreifring-Feder ermöglicht eine verringerte Ölkohlebildung durch erhöhte Strömungsgeschwindigkeit und damit keine Verdichtung des Öls sowie der daraus resultierenden Ölkohlebildung zwischen der Feder und den angrenzenden Metallringen. Ferner besteht die Möglichkeit der Regulierung des Öldrucks auf der radial äußeren Seite der Ölabstreifring-Feder, d.h. der Seite der Zylinderlaufbuchse im eingebauten Zustand, gegenüber der radial inneren Seite, d.h. der Seite der Kolbennut, durch geometrische Veränderungen des Winkels, also der Neigung der eingeprägten Vertiefung bzw. Delle. Zusätzlich wird eine axiale Abdichtung der Kolbennut durch hydrostatisches Andrücken der Metallringe an die obere und untere Kolbennutflanke verbessert.

Gemäß einer Ausführungsform weist die Vertiefung in dem Auflageabschnitt im Wesentlichen die Gestalt eines Halbtrichters auf. Die halbtrichterförmige Gestaltung der Vertiefung im Auflageabschnitt ermöglicht einen gleichmäßigen Verlauf der Tiefenzunahme in Richtung zu der Durchgangsöffnung hin. Bevorzugt weist der Halbtrichter einen Öffnungswinkel von 30° bis 150°, besonders bevorzugt von 30° bis 60°, auf. In dem engeren Winkelbereich ergibt sich eine besonders gute Förderwirkung hinsichtlich des Öls in radialer Richtung. Gleichzeitig ist der Öffnungswinkel der halbtrichterförmigen Vertiefung dabei so groß, dass sich ein ausreichendes Fördervolumen in der Vertiefung für das Öl ergibt.

Gemäß einer Ausführungsform dient die Vertiefung zusammen mit der Durchgangsöffnung zur Vergrößerung und zur Beschleunigung des Ölflusses zur Kolbenmitte hin. Dadurch, dass die Vertiefung sich in ihrer Tiefe bzw. Breite radial nach innen, d. h., in Richtung auf einen von der Ölabstreifring-Feder umschlossenen Kolben, vergrößert, wird ein beschleunigter Ölfluss des von der Ölabstreifring-Feder und den zugeordneten Metallringen geförderten Öls in radialer Richtung, d. h., zur Kolbenmitte hin, erzielt. Dabei wirkt die Vertiefung mit der angrenzenden Durchgangsöffnung zusammen und bieten einen guten Ablauf für das Öl zusammen mit den Verbrennungsrückständen.

Gemäß einer Ausführungsform ist das radial äußere Ende der Vertiefung in dem Auflageabschnitt an einer Vertiefungsbeginn-Position angeordnet, die beabstandet von dem äußeren Umfangsende ist, insbesondere um 20 bis 30% der Breite der Ölabstreifring-Feder, in Radialrichtung gesehen, beabstandet von dem äußeren Umfangsende ist. Dadurch bleibt ein Bereich des Auflageabschnitts frei von der Vertiefung, wodurch sich eine größere Kontaktfläche für den Metallring auf dem Auflageabschnitt der Ölabstreifring-Feder ergibt. Hierdurch kann die Belastung der Ölabstreifring-Feder durch den Metallring im Bereich des Auflageabschnitts verringert werden. Insbesondere wird der Abrieb der Ölabstreifring-Feder verursacht durch den auf der Ölabstreifring-Feder aufliegenden Metallring verringert.

Gemäß einer Ausführungsform liegt der Teil des Auflageabschnitts zwischen der Vertiefungsbeginn-Position und dem äußeren Umfangsende in der Radialebene des Auflageabschnitts. Unter Radialebene wird hier eine den Auflageabschnitt berührende Ebene, die insbesondere die Symmetrieachse der Ölabstreifring-Feder in einem rechten Winkel schneidet, verstanden. Dadurch ergibt sich eine teilweise flächige Auflage des Metallrings auf der Ölabstreifring-Feder, wodurch die Flächenbelastung in Berührbereich zwischen der Ölabstreifring-Feder und dem Metallring gering gehalten wird und der Verschleiß minimiert ist. Dies ist gerade bei kleinen Relativbewegungen zwischen der Ölabstreifring-Feder und dem darauf aufliegenden Metallring von besonderem Vorteil.

Gemäß einer Ausführungsform weist das radial innere Ende der Vertiefung eine maximale Tiefe von 0,05 mm bezogen auf die Ebene des Auflageabschnitts auf. Versuchsreihen haben gezeigt, dass schon bei dieser geringen Tiefe der Vertiefung der Ölfördereffekt in Richtung auf die Durchgangsöffnung zu hinreichend auftritt. Eine geringe Tiefe der ausgebildeten Vertiefung bietet den Vorteil von großen möglichen Rundungsradien der Ölabstreifring-Feder im Bereich des Auflageabschnitts und damit geringen punktuellen bzw. linienförmigen Belastungen im Kontaktbereich mit dem Metallring.

Gemäß einer Ausführungsform ist das radial äußere Ende der Vertiefung in dem Auflageabschnitt an einer Vertiefungsbeginn-Position angeordnet, deren Breite insbesondere der Breite von 10 bis 20% der Breite der Durchgangsöffnung entspricht. Unter Breite der Durchgangsöffnung wird hier deren maximale Erstreckung in der Umfangsrichtung der Ölabstreifring-Feder verstanden.

Gemäß einer Ausführungsform nimmt die Breite der Vertiefung in dem Auflageabschnitt in radialer Richtung von der Vertiefungsbeginn-Position zu der radialen Position der Durchgangsöffnung zu, insbesondere so zu, dass die Breite der Vertiefung an der radialen Position der Durchgangsöffnung der Breite der Durchgangsöffnung entspricht. Die Vertiefung ist dadurch in Umfangsrichtung der Ölabstreifring-Feder gesehen dort, wo sie in die Durchgangsöffnung mündet, gleich breit wie die Durchgangsöffnung. Hierdurch ergibt sich ein besonders ungestörter Abfluss des sich im Betrieb in der Vertiefung ansammelnden Öls in die Durchgangsöffnung hinein. Ein Aufstauen von Öl am Nasenabschnitt wird dadurch weitestgehend vermieden.

Gemäß einer Ausführungsform beträgt die Breite der Durchgangsöffnung mindestens 0,1 bis 0,7 mm. Bei dieser Breite wird bereits ein guter Durchfluss durch die Durchgangsöffnung auch bei hoher Viskosität des Öls, von beispielsweise 21,9 mm²/s, erzielt.

Gemäß einer Ausführungsform liegt die Schnittfläche der Durchgangsöffnung im Wesentlichen in Axialrichtung und/oder weist eine Fläche von 0,1 bis 0,5 Quadratmillimetern auf.

Gemäß einer Ausführungsform beträgt die Höhe der Durchgangsöffnung, gemessen im Wesentlichen in Axialrichtung von der Unterseite des höchsten Teils des Nasenabschnitts bis zur Oberseite des tiefsten Teils der Vertiefung 0,1 bis 0,9 mm.

Gemäß einer Ausführungsform liegt die Erstreckungsrichtung der Vertiefung in radialer Richtung; und/oder die Vertiefung fluchtet mit der jeweiligen Durchgangsöffnung. Die radiale Erstreckungsrichtung der Vertiefung bietet einen besonders kurzen Transportweg für das Öl in radialer Richtung über die Ölabstreifring-Feder hinweg. Bevorzugt ist die Vertiefung in radialer Richtung, d. h., senkrecht zur Umfangsrichtung der Ölabstreifring-Feder, symmetrisch ausgeführt. Dadurch, dass die Vertiefung mit der jeweiligen Durchgangsöffnung fluchtet, wird ein optimaler Transport des in der Vertiefung angesammelten Öls durch die Durchgangsöffnung erzielt. Ein Aufstauen von Öl an der Durchgangsöffnung wird vermieden.

Gemäß einer Ausführungsform schließt die Oberseite des Bodens der Vertiefung einen Winkel von 3-30° mit der Radialebene ein; und/oder spannen die oberen Seitenkanten bzw. Seitenflanken der Vertiefung ein Winkelsegment von 5-50°, bevorzugt von 5-15°, auf. Die Oberseite des Bodens schließt dabei bevorzugt in radialer Richtung gesehen einen Winkel von 3-30° mit der Radialebene ein. Unter Oberseite des Bodens der Vertiefung wird hier der Bereich verstanden, in dem sich das Öl sammelt, der also eine muldenförmige Form aufweist. Der Winkel von 3-30° führt zu einem guten Ablaufverhalten des Öls in Richtung auf die Durchgangsöffnung hin. Das Öl wird dabei in Betrieb durch die oszillierende Bewegung der Ölabstreifring-Feder zusammen mit dem Kolben durch seine Trägheit und Viskosität in die Vertiefung hineingedrückt. Der dabei entstehende Druck führt zusammen mit dem Winkel von 3-30° zu einem Ablaufen des Öls auf der Oberseite des Bodens zur Durchgangsöffnung hin. Der Winkelbereich von 5-50°, bevorzugt von von 5-15°, für das Winkelsegment der Seitenkanten der Vertiefung ist in einer Ebene gemessen, die parallel zur Erstreckungsachse der Ölabstreifring-Feder und insbesondere orthogonal zur Erstreckungsrichtung der Vertiefung verläuft. In dem genannten Winkelbereich ergibt sich eine sehr gute kanalartige Sammlung des Öls in der Vertiefung.

Gemäß einer Ausführungsform beträgt die radiale Breite des Nasenabschnitts 0,2 bis 1,2 mm; und/oder die radiale Breite des Auflageabschnitts beträgt 0,1 bis 1,1 mm. Unter radialer Breite des Nasenabschnitts wird dessen maximale Erstreckung in der Umfangsrichtung der Ölabstreifring-Feder verstanden. Unter radialer Breite des Auflageabschnitts wird dessen maximale Erstreckung in der Umfangsrichtung der Ölabstreifring-Feder verstanden.

Gemäß einem Aspekt betrifft die Erfindung einen Ölabstreifring zum Montiert-Sein in einer Ölringnut eines Kolbens, aufweisend eine Ölabstreifring-Feder, einen oberen Metallring, der auf den Auflageabschnitten der oberen Bereiche der Ölabstreifring-Feder aufliegt und dessen radiale Innenfläche an den radialen Außenflächen der Nasenabschnitte der oberen Bereiche der Ölabstreifring-Feder anliegt; und einen unteren Metallring, der an den Auflageabschnitten der unteren Bereiche der Ölabstreifring-Feder anliegt und dessen radiale Innenfläche an der radialen Außenfläche der Nasenabschnitte der unteren Bereiche der Ölabstreifring-Feder anliegt.

Die Erfindung wird im Folgenden anhand von Ausführungsbeispielen unter Bezugnahme auf die beiliegenden Figuren näher erläutert:
Fig. 1 zeigt eine Ölabstreifring-Feder für einen Ölabstreifring gemäß einem Ausführungsbeispiel in der Draufsicht und zwei Seitenansichten;
Fig. 2 zeigt einen Teilbereich der Ölabstreifring-Feder gemäß dem Ausführungsbeispiel von Fig. 1 in einer perspektivischen Darstellung;
Fig. 3 zeigt die Ölabstreifring-Feder gemäß dem Ausführungsbeispiel von Fig. 1 als vergrößerte Darstellung F, an der Stelle, die mit dem Buchstaben F in der linken Seitenansicht in Fig. 1 markiert ist;
Fig. 4 zeigt die Ölabstreifring-Feder gemäß dem Ausführungsbeispiel von Fig. 1 als vergrößertes Detail E des Schnitts A-A, wie rechts in Fig. 1 markiert;
Fig. 5 zeigt einen Ölabstreifring gemäß einem ersten Ausführungsbeispiel als Ausschnitt wie in der seitlichen Schnittdarstellung in Fig. 4; und
Fig. 6 zeigt den Ölabstreifring gemäß dem ersten Ausführungsbeispiel als Schnittdarstellung.

In den Figuren bezeichnen dieselben Bezugszeichen gleiche oder funktionsgleiche Komponenten, soweit nichts Gegenteiliges angegeben ist.

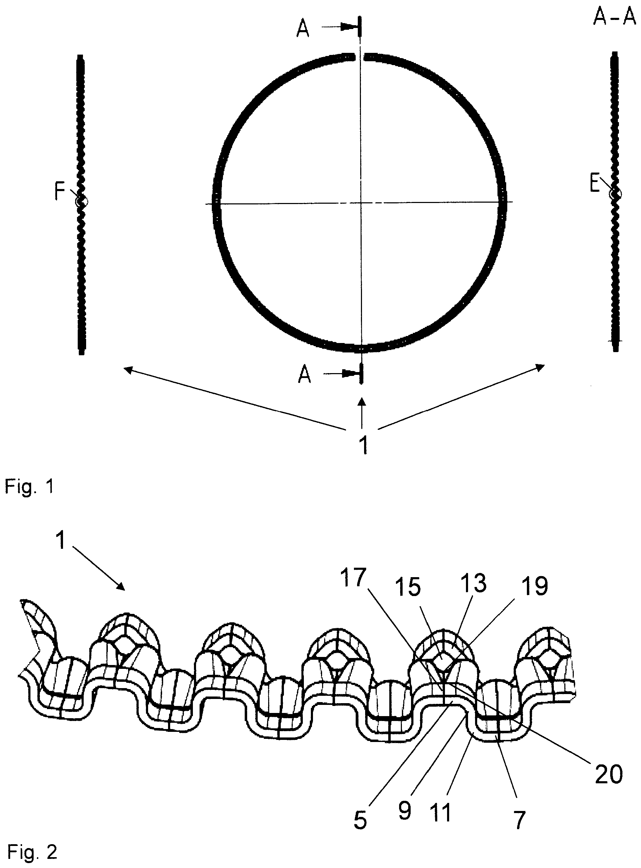

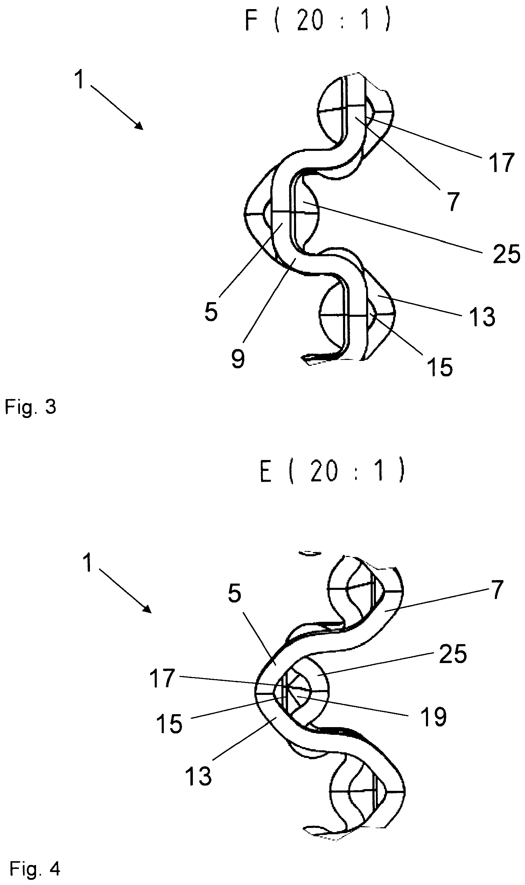

Fig. 1 zeigt eine Ölabstreifring-Feder 1 für einen Ölabstreifring 3 (in Fig. 1 nicht dargestellt) gemäß einem Ausführungsbeispiel in der Draufsicht und zwei Seitenansichten. In der Mitte im Bild ist die Ölabstreifring-Feder 1 in der Draufsicht dargestellt. Die Ölabstreifring-Feder 1 liegt dabei sich im Wesentlichen kreisförmig erstreckend in der Bildebene von Fig. 1. Zwei übereinander angeordnete im Bild nach rechts zeigende und mit dem Großbuchstaben A gekennzeichnete Pfeile kennzeichnen eine Schnittebene A-A. Die Schnittebene A-A verläuft durch die vertikale Symmetrieachse der Ölabstreifring-Feder 1 orthogonal in die Bildebene hinein. Rechts im Bild befindet sich eine Schnittdarstellung der Ölabstreifring-Feder 1 gesehen in der Schnittebene A-A. Links im Bild ist eine Seitenansicht der Ölabstreifring-Feder 1 dargestellt. Mit dem Buchstaben E ist ein Detail in der Schnittdarstellung markiert, das mit Bezug auf Fig. 4 beschrieben wird. Der Buchstabe F gibt ein Detail in der links gezeigten Seitenansicht an, das mit Bezug auf Fig. 3 dargelegt wird.

Fig. 2 zeigt einen Teilbereich der Ölabstreifring-Feder 1 gemäß dem Ausführungsbeispiel von Fig. 1 in einer perspektivischen Darstellung. Der gezeigte Abschnitt stellt ein Ringsegment der Ölabstreifring-Feder 1 dar. Die in Fig. 2 gezeigte Darstellung ergibt sich bspw. aus der mittleren Darstellung von Fig. 1, indem ein im Bild unterer Teil der Ölabstreifring-Feder 1 ausgeschnitten und nach oben über in die Bildebene hinein geschwenkt wird. Die Ölabstreifring-Feder 1 gemäß diesem Ausführungsbeispiel ist im Wesentlichen symmetrisch zu einer radialen Ebene, die senkrecht zur Symmetrieachse der Ölabstreifring-Feder ausgerichtet ist, gestaltet.

Mehrere obere Bereiche 5 und mehrere untere Bereiche 7 sind alternierend in einer Umfangsrichtung der Ölabstreifring-Feder 1 angeordnet, sodass sie einen Abstand in der Axialrichtung haben und in Umfangsrichtung direkt nebeneinander angeordnete obere Bereiche 5 und direkt nebeneinander angeordnete untere Bereiche 7 in der Umfangsrichtung voneinander beabstandet sind. Verbindungsbereiche 9 verbinden die jeweils benachbarten oberen Bereiche 5 und unteren Bereiche 7. Bei diesem Ausführungsbeispiel weisen die Verbindungsbereiche Rundungen 11 auf, sodass die oberen Bereiche 5 und die unteren Bereiche 7 über die Verbindungsbereiche 9 gerundet ineinander übergehen. Diese Form ist gut als angenäherte Wellenlinie auf der dem Betrachter zugewandten Seite, die gleichzeitig den Außenumfang der Ölabstreifring-Feder 1 bildet, in Fig. 2 erkennbar.

Jeder der oberen Bereiche 5 und unteren Bereiche 7 weist einen Nasenabschnitt 13 auf, der am inneren Umfangsende angeordnet ist. Die Nasenabschnitte 13 weisen bei diesem Ausführungsbeispiel jeweils eine Durchgangsöffnung 15 auf. In Fig. 2 sind die Nasenabschnitte 13 am hinteren Bildrand als auf den Kopf gestellte gerundete V erkennbar. In dieser Darstellung sind lediglich die im Bild nach oben ragenden Nasenabschnitte 13 der oberen Bereiche 5 zu sehen, während die nach unten ragenden Nasenabschnitte 13 der unteren Bereiche 7 in der Darstellung verdeckt sind. Die unteren Nasenabschnitte 13 sind jedoch in den Fig. 3 und Fig. 4 gut erkennbar.

Jeder der oberen Bereiche 5 und der unteren Bereiche 7 weist ferner einen Auflageabschnitt 17 auf, der sich radial zwischen dem Nasenabschnitt 13 und dem äußeren Umfangsende erstreckt und dazu ausgebildet ist, dass ein oberer Metallring 21 (in Fig. 2 nicht dargestellt) oder unterer Metallring 23 (in Fig. 2 nicht dargestellt) des Ölabstreifrings 3 darauf aufliegt bzw. daran anliegt. Ein Ölabstreifring 3 beinhaltet dann die Ölabstreifring-Feder 1, einen auf dem Auflageabschnitt 17 des oberen Bereichs 5 aufliegenden oberen Metallring 21 und einen auf dem Auflageabschnitt des unteren Bereichs 7 aufliegenden unteren Metallring 23.

Die Nasenabschnitte 13 sind dazu ausgebildet, dass sie die Metallringe 21, 23 radial nach innen in ihrer Bewegungsfreiheit begrenzen. Der jeweilige Metallring 21, 23 verläuft dann radial außen an den Nasenabschnitten 13 vorbei und liegt bspw. direkt an den Nasenabschnitten 13 an. Auf diese Weise wird eine Zentrierung des oberen und des unteren Metallrings 21, 23 koaxial zu der Ölabstreifring-Feder 1 erreicht.

In jedem Auflageabschnitt 17 ist bei diesem Ausführungsbeispiel eine Vertiefung 19 ausgebildet, deren Tiefe, bezogen auf die Auflagefläche des Auflageabschnitts 17, in radialer Richtung zu der Durchgangsöffnung 15 hin zunimmt und deren Breite in radialer Richtung zu der Durchgangsöffnung 15 hin zunimmt. Die Vertiefungen 19 sind im Bild V-förmig an den Auflageabschnitten der oberen Bereiche erkennbar. Bei diesem Ausführungsbeispiel beginnen die Vertiefungen 19 etwa bei Zweidrittel der radialen Erstreckung des Auflageabschnitts 17 vom Außenumfang der Ölabstreifring-Feder 1 entfernt. Auf die Durchgangsöffnung 15 zu steigert sich dann die Tiefe und Breite der Vertiefung 19. Im Bild sind an den Auflageabschnitten 17 der unteren Bereiche 7 die Vertiefungen als Wölbungen im Bild nach oben erkennbar. Bei diesem Ausführungsbeispiel ist das radial äußere Ende der Vertiefung 19 in dem Auflageabschnitt 17 an einer Vertiefungsbeginn-Position 20 angeordnet, die beabstandet von dem äußeren Umfangsende ist. Dadurch ergibt sich eine vergrößerte vertiefungsfreie Auflagefläche für den jeweiligen Metallring 21, 23. Bei diesem Ausführungsbeispiel weisen die Verbindungsbereiche 9 eine in Umfangsrichtung der Ölabstreifring-Feder 1 hin zu den Nasenabschnitten 13 zunehmende Breite auf.

Im Betrieb wird die Ölabstreifring-Feder 1 mit beidseitig aufgelegtem oberen Metallring 21 bzw. unteren Metallring 23 als Ölabstreifring 3 in einer Nut eines Kolbens eines Verbrennungsmotors verlaufend angeordnet. Die Ölabstreifring-Feder 1 wird dann im Betrieb in ihrer axialen Richtung relativ zu einem Zylinder, in dem der Kolben arbeitet, hin- und herbewegt. Überschüssiges Öl, das sich zwischen dem oberen Metallring 21 und dem unteren Metallring 23 im Bereich der Ölabstreifring-Feder 1 ansammelt kann über die Vertiefungen 19 in den Auflageabschnitten 17 und den Durchgangsöffnungen 15 in den Nasenabschnitten 13 radial abgeführt werden. Dabei arbeiten die Vertiefungen 19 und die bei diesem Ausführungsbeispiel mit den Vertiefungen 19 fluchtenden Durchgangsöffnungen 15 für einen guten Öltransport zusammen. Verbrennungs- und Ölrückstände können dadurch wirkungsvoll aus dem Bereich der Ölabstreifring-Feder 1, d. h. dem Bereich zwischen dem oberen Metallring 21 und dem unteren Metallring 23, abgeführt werden. Dadurch kann die Reibung im Motor gesenkt, der Wirkungsgrad des Motors erhöht, die Lebensdauer des Motors verlängert und die Schadstoffemissionen können verbessert werden.

Fig. 3 zeigt die Ölabstreifring-Feder 1 gemäß dem Ausführungsbeispiel von Fig. 1 als vergrößerte Darstellung an der Stelle, die mit dem Buchstaben F in der linken Seitenansicht in Fig. 1 markiert ist. In dieser Darstellung ist der Außenumfang der Ölabstreifring-Feder 1 auf den Betrachter zugewandt, während das innere Umfangsende mit den Nasenabschnitten 13 unten in der Bildebene liegt. Die Nasenabschnitte 13 ragen nach links bzw. nach rechts aus der im Wesentlichen vertikalen Erstreckung des Abschnitts der Ölabstreifring-Feder 1 weg. In dieser Seitenansicht sind nun auch die unteren Bereiche 7 mit den dort vorgesehenen Nasenabschnitten erkennbar. Die unteren Bereiche 7 ragen im Bild nach rechts weg, während die oberen Bereiche 5 nach links verlaufen. Die Vertiefungen 19 sind in dieser Ansicht nicht direkt erkennbar, jedoch sind Ausstülpungen 25 erkennbar, die den Boden der Vertiefungen 19 bilden, und die durch die Formgebung der Vertiefungen 19 und die Realisierung als Blech-Formteil bedingt sind.

Fig. 4 zeigt die Ölabstreifring-Feder 1 gemäß dem Ausführungsbeispiel von Fig. 1 als vergrößertes Detail E des Schnitts A-A, wie rechts in Fig. 1 markiert. In dieser Ansicht liegen die Nasenabschnitte 13 vorne im Bild. Der Blick des Betrachters fällt jeweils durch die Durchgangsöffnung 15 radial nach außen in die Vertiefung 19 hinein. In dieser Ansicht ist gut erkennbar, wie sich die Vertiefung 19 im oberen Bereich 5 radial in Richtung der unteren Bereiche 7 im Material der Ölabstreifring-Feder 1 als Ausstülpung zeigt. Die Auflageabschnitte 17 sind in dieser Darstellung durch die Durchgangsöffnungen 15 hindurch als im Wesentlichen vertikal verlaufende Linien erkennbar.

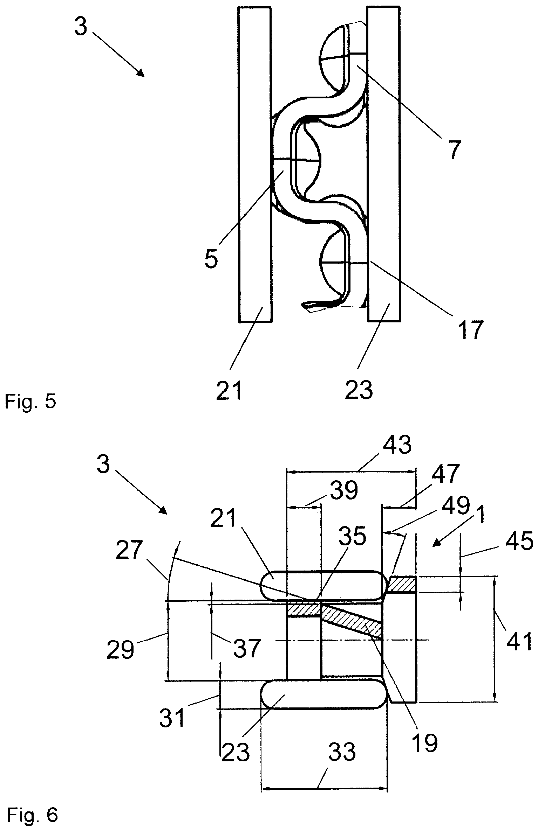

Fig. 5 zeigt einen Ölabstreifring 3 gemäß einem ersten Ausführungsbeispiel als Ausschnitt wie in der seitlichen Schnittdarstellung in Fig. 4. Der Ölabstreifring 3 weist eine Ölabstreifring-Feder 1 auf, die zwischen einem oberen Metallring 21 und einem unteren Metallring 23 verläuft. Die Metallringe 21, 23 werden von der Ölabstreifring-Feder 1 auseinander gedrückt bzw. auf Abstand gehalten. Die Ölabstreifring-Feder 1 ist dabei wie in den Fig. 1 bis 4 beschrieben gestaltet. Nach hinten in die Bildebene hinein sind die Nasenabschnitte 13 angeordnet, die nun hinter die in der Bildebene davor angeordneten Metallringe 21, 23 greifen und diese radial nach außen begrenzen bzw. drücken.

Fig. 6 zeigt den Ölabstreifring 3 gemäß dem ersten Ausführungsbeispiel als Schnittdarstellung.

Der obere Metallring 21 ist in dieser Darstellung über dem unteren Metallring 23 als gerundetes Rechteck dargestellt. Die Ölabstreifring-Feder 1 ist zwischen beiden Metallringen 21, 23 angeordnet und teilweise schraffiert dargestellt. Anhand dieser Darstellung soll die Geometrie des Ölabstreifrings 3, insbesondere der Ölabstreifring-Feder 1 weiter verdeutlicht werden. Mit einem Vertiefungswinkel 27 ist der Winkel angegeben, den die Oberseite des Bodens der Vertiefung 19 mit der Radialebene der Ölabstreifring-Feder 1 einschließt. Im Bild nimmt die Tiefe der Vertiefung 19 von links nach rechts bis zu ihrer maximalen Tiefe, d.h. maximalen Beabstandung zum auf der Ölabstreifring-Feder 1 aufliegenden oberen Metallring 21, zu.

Mit einer Stützhöhe 29 ist die Beabstandung des unteren Metallrings 23 und oberen Metallrings 21 durch die Ölabstreifring-Feder 1 bemessen. Eine axiale Metallringdicke 31 als dessen Erstreckung in axialer Richtung und eine radiale Metallringbreite 33 als dessen Erstreckung in radialer Richtung sind als Abmessungen an dem unteren Metallring 23 dargestellt.

Ferner ist in dieser Darstellung an der Ölabstreifring-Feder 1 gemäß diesem Ausführungsbeispiel ein Absatz 35 erkennbar, der sich in Richtung auf den oberen Metallring 21 zu erstreckt und zum Aufliegen des oberen Metallrings 21 dient. Ein entsprechender Absatz 35 ist an der Ölabstreifring-Feder 1 zum Aufliegen des unteren Metallrings 23 vorgesehen, jedoch in dieser Darstellung nicht erkennbar. Der Absatz weist eine Absatzhöhe 37 auf, mit der er radial über das Niveau des Beginns der Vertiefung 19 in Richtung auf den oberen Metallring 21 zu ragt. Eine Absatzlänge 39 des Absatzes 35 gibt dessen Erstreckung radial entlang der Ölabstreifring-Feder 1 an. Eine Vergrößerung der Absatzlänge 39 bedingt demnach eine Vergrößerung der Kontaktfläche zwischen dem jeweiligen Metallring 21, 23 und dem zugeordneten Absatz 35.

Mit einer axialen Federhöhe 41 der Ölabstreifring-Feder 1 ist deren Erstreckung, also Abmessung, in axialer Richtung bezeichnet. Mit einer radialen Federbreite 43 der Ölabstreifring-Feder 1 ist deren Erstreckung in radialer Richtung der Ölabstreifring-Feder 1 angeben. Eine Materialdicke 45 ist im schraffierten Bereich der hier senkrecht in die Papierebene hinein verlaufenden Ölabstreifring-Feder 1 gezeigt. Beispielsweise wird die Ölabstreifring-Feder 1 als Blechbiegeteil aus einem Blech entsprechend der Materialdicke 45 hergestellt.

Des Weiteren ist in dieser Figur eine Dicke 47 des Nasenabschnitts 13 angegeben. Die Dicke 47 entspricht einer radialen Erstreckung des Nasenabschnitts 13 beginnend am Ende der Vertiefung 19 bis zum radialen Ende des Nasenaschnitts 13. Ein Winkel 49 des Nasenabschnitts 13 entspricht dessen Neigung relativ zur axialen Richtung der Ölabstreifring-Feder 1. Der Winkel 49 bewirkt ein axiales Auseinanderdrücken der Metallringe 21, 23 resultierend aus einer radialen Andrückkraft zwischen dem unter dem Winkel 49 angewinkelten Nasenabschnitt 13 und den Metallringen 21, 23.

### Bezugszeichenliste

- 1: Ölabstreifring-Feder
- 3: Ölabstreifring
- 5: obere Bereiche
- 7: untere Bereiche
- 9: Verbindungsbereiche
- 11: Rundung
- 13: Nasenabschnitt
- 15: Durchgangsöffnung
- 17: Auflageabschnitt
- 19: Vertiefung
- 20: Vertiefungsbeginn-Position
- 21: oberer Metallring
- 23: unterer Metallring
- 25: Ausstülpung
- 27: Vertiefungswinkel
- 29: Stützhöhe
- 31: axiale Metallringdicke
- 33: radiale Metallringbreite
- 35: Absatz
- 37: Absatzhöhe
- 39: Absatzlänge
- 41: axiale Federhöhe
- 43: axiale Federbreite
- 45: Materialdicke
- 47: Dicke des Nasenabschnitts
- 49: Winkel des Nasenabschnitts
- A: Schnittebenenpfeil
- E: Detail in der Schnittdarstellung
- F: Detail in der Seitenansicht

## Patentansprüche

1. Ölabstreifring-Feder (1) für einen Ölabstreifring (3), der die Ölabstreifring-Feder (1), einen oberen und einen unteren Metallring (21, 22) aufweist und zum Montiert-Sein in einer Ölringnut eines Kolbens vorgesehen ist, aufweisend:
mehrere obere Bereiche (5) und mehrere untere Bereiche (7), die alternierend in einer Umfangsrichtung angeordnet sind, so dass sie einen Abstand in einer Axialrichtung haben;
Verbindungsbereiche (9), die jeweils die benachbarten oberen und unteren Bereiche (5, 7) miteinander verbinden;
wobei jeder der oberen und der unteren Bereiche (5, 7) jeweils Folgendes aufweist:
einen Nasenabschnitt (13), der am inneren Umfangsende angeordnet und dazu ausgebildet ist, den jeweils anliegenden, oberen oder unteren Metallring (21, 22) radial nach außen zu drücken, und der eine Durchgangsöffnung (15) aufweist;
einen Auflageabschnitt (17), der sich zwischen dem Nasenabschnitt (13) und dem äußeren Umfangsende erstreckt und dazu ausgebildet ist, dass der jeweilige, obere Metallring (21) darauf aufliegt oder der jeweilige, untere Metallring (22) daran anliegt;
wobei in dem Auflageabschnitt (17) eine Vertiefung (19) ausgebildet ist,;
**dadurch gekennzeichnet, dass**
sich der Auflageabschnitt (17) radial zwischen dem Nasenabschnitt (13) und dem äußeren Umfangsende erstreckt;
die Tiefe der Vertiefung (19), bezogen auf die Auflagefläche des Auflageabschnitts (17), in radialer Richtung zu der Durchgangsöffnung (15) hin zunimmt;
die Breite der Vertiefung (19) in dem Auflageabschnitt (17) in radialer Richtung zu der Durchgangsöffnung (15) hin zunimmt;
die Vertiefung (19) in dem Auflageabschnitt (17) im Wesentlichen die Gestalt eines Halbtrichters hat;
der Halbtrichter einen Öffnungswinkel von 30° bis 150°, insbesondere von 30° bis 60°, aufweist oder wobei die oberen Seitenkanten der Vertiefung (19) ein Winkelsegment von 5-50°, insbesondere von 5-15°, aufspannen; und
die Vergrößerung der Tiefe und Breite der Vertiefung (19) radial nach innen zusammen mit der Durchgangsöffnung (15) zur Vergrößerung und zur Beschleunigung des Ölflusses zur Kolbenmitte hin dient.

2. Ölabstreifring-Feder (1) nach Anspruch 1,
wobei das radial äußere Ende der Vertiefung (19) in dem Auflageabschnitt (17) an einer Vertiefungsbeginn-Position (20) angeordnet ist, die beabstandet von dem äußeren Umfangsende ist, insbesondere um 20 bis 30% der Breite der Ölabstreifring-Feder (1), in Radialrichtung gesehen, beabstandet von dem äußeren Umfangsende ist.

3. Ölabstreifring-Feder (1) nach Anspruch 2,
wobei der Teil des Auflageabschnitts (17) zwischen der Vertiefungsbeginn-Position (1) und dem äußeren Umfangsende in der Radialebene des Auflageabschnitts (17) liegt.

4. Ölabstreifring-Feder (1) nach einem der vorhergehenden Ansprüche,
wobei das radial innere Ende der Vertiefung (19) eine maximale Tiefe von 0,05 mm bezogen auf die Ebene des Auflageabschnitts (17) aufweist.

5. Ölabstreifring-Feder (1) nach einem der vorhergehenden Ansprüche,
wobei das radial äußere Ende der Vertiefung (19) in dem Auflageabschnitt (17) an einer Vertiefungsbeginn-Position (20) angeordnet ist, deren Breite insbesondere der Breite von 10 bis 20% der Breite der Durchgangsöffnung (15) entspricht.

6. Ölabstreifring-Feder (1) nach Anspruch 5,
wobei die Breite der Vertiefung (19) in dem Auflageabschnitt (17) in radialer Richtung von der Vertiefungsbeginn-Position (20) zu der radialen Position der Durchgangsöffnung (15) zunimmt, insbesondere so zunimmt, dass die Breite der Vertiefung (19) an der radialen Position der Durchgangsöffnung (15) der Breite der Durchgangsöffnung (15) entspricht.

7. Ölabstreifring-Feder (1) nach einem der vorhergehenden Ansprüche,
wobei die Breite der Durchgangsöffnung (15) 0,1 bis 0,7 mm beträgt.

8. Ölabstreifring-Feder (1) nach einem der vorhergehenden Ansprüche,
wobei die Schnittfläche der Durchgangsöffnung (15) im Wesentlichen in Axialrichtung liegt und/oder eine Fläche von 0,1 bis 0,5 Quadratmillimeter aufweist.

9. Ölabstreifring-Feder (1) nach einem der vorhergehenden Ansprüche,
wobei die Höhe der Durchgangsöffnung (15), gemessen im Wesentlichen in Axialrichtung von der Unterseite des höchsten Teils des Nasenabschnitts (13) bis zur Oberseite des tiefsten Teils der Vertiefung (19) 0,1 bis 0,9 mm beträgt.

10. Ölabstreifring-Feder (1) nach einem der vorhergehenden Ansprüche,
wobei die Erstreckungsrichtung der Vertiefung (19) in radialer Richtung liegt; und/oder
wobei die Vertiefung (19) mit der jeweiligen Durchgangsöffnung (15) fluchtet.

11. Ölabstreifring-Feder (1) nach einem der vorhergehenden Ansprüche,
wobei die Oberseite des Bodens der Vertiefung (19) einen Winkel von 3-30° mit der Radialebene einschließt.

12. Ölabstreifring-Feder nach einem der vorhergehenden Ansprüche,
wobei die radiale Breite des Nasenabschnitts (13) 0,2 bis 1,2 mm beträgt; und/oder wobei die radiale Breite des Auflageabschnitts (17) 0,1 bis 1,1 mm beträgt.

13. Ölabstreifring (3) zum Montiert-Sein in einer Ölringnut eines Kolbens, aufweisend
eine Ölabstreifring-Feder (1) nach einem der vorhergehenden Ansprüche,
einen oberen Metallring (21), der auf den Auflageabschnitten (17) der oberen Bereiche der Ölabstreifring-Feder (1) aufliegt und dessen radiale Innenfläche an den radialen Außenflächen der Nasenabschnitte (13) der oberen Bereiche (5) der Ölabstreifring-Feder (1) anliegt; und
einen unteren Metallring (23), der an den Auflageabschnitten (17) der unteren Bereiche (7) der Ölabstreifring-Feder (1) anliegt und dessen radiale Innenfläche an der radialen Außenfläche der Nasenabschnitte (13) der unteren Bereiche der Ölabstreifring-Feder (1) anliegt.

## Claims

1. An oil scraper ring spring (1) for an oil scraper ring (3) comprising the oil scraper ring spring (1), an upper metal ring (21) and a lower metal ring (22) and provided for being mounted in an oil ring groove of a piston, comprising:
a plurality of upper regions (5) and a plurality of lower regions (7) arranged in alternating manner in a circumferential direction so as to be spaced in an axial direction;
connecting regions (9), each connecting adjacent upper and lower regions (5, 7) to each other;
wherein each of the upper and lower regions (5, 7) includes:
a nose section (13) disposed at an inner circumferential end and adapted to push the respectively abutting upper or lower metal ring (21, 22) radially out - wardly and having a through-opening (15);
an abutment section (17) extending between the nose section (13) and the outer circumferential end and configured to have either the respective upper metal ring (21) abutting thereon or the respective lower metal ring (22) abut - ting thereon;
wherein the abutment section (17) has a recess (19) formed therein,
**characterized in that**
the abutment section (17) extends radially between the nose section (13) and the outer circumferential end;
the depth of the recess (19) relative to the abutment area of the abutment section (17) increases in a radial direction towards the through-opening (15);
the width of the recess (19) in the abutment section (17) increases in the ra - dial direction towards the through-opening (15);
the recess (19) in the abutment section (17) has a shape substantially of a half-funnel;
the half-funnel has an opening angle in a range of 30° to 150°, in particular of 30° to 60°, or wherein upper side edges of the recess (19) span an angu - lar segment in a range of 5-50°, in particular of 5-15°; and
the increase in depth and width of the recess (19) radially inwardly together with the through-opening (15) serves to increase and accelerate the oil flow to the piston centre.

2. The oil scraper ring spring (1) according to claim 1,
wherein the radially outer end of the recess (19) in the abutment section (17) is arranged at a recess start position (20) spaced from the outer circumferential end, in particular being spaced from the outer circumferential end by 20 to 30% of the width of the oil scraper ring spring (1), as viewed in the radial direction.

3. The oil scraper ring spring (1) according to claim 2,
wherein a part of the abutment section (17) between the recess start posi - tion (1) and the outer circumferential end is located in a radial plane of the abutment section (17).

4. The oil scraper ring spring (1) according to any one of the preceding claims,
wherein a radially inner end of the recess (19) has a maximum depth of 0.05 mm with respect to the plane of the abutment section (17).

5. The oil scraper ring spring (1) according to any one of the preceding claims,
wherein a radially outer end of the recess (19) in the abutment section (17) is arranged at a recess start position (20), with the width thereof corres - ponding in particular to a width of 10 to 20% of the width of the through-opening (15).

6. The oil scraper ring spring (1) according to claim 5,
wherein the width of the recess (19) in the abutment section (17) increases in the radial direction from the recess start position (20) to the radial position of the through-opening (15), in particular increases such that the width of the recess (19) at the radial position of the through-opening (15) corresponds to the width of the through-opening (15).

7. The oil scraper ring spring (1) according to any one of the preceding claims,
wherein the width of the through-opening (15) is in a range of 0.1 to 0.7 mm.

8. The oil scraper ring spring (1) according to any one of the preceding claims,
wherein a sectional area of the through-opening (15) is arranged substan - tially in an axial direction and/or has an area in a range of 0.1 to 0.5 square millimetres.

9. The oil scraper ring spring (1) according to any one of the preceding claims,
wherein a height of the through-opening (15), as measured substantially in the axial direction from a bottom side of a highest part of the nose section (13) to an upper side of a deepest part of the recess (19), is in a range of 0.1 to 0.9 mm.

10. The oil scraper ring spring (1) according to any one of the preceding claims,
wherein an extension direction of the recess (19) is in a radial direction; and/or
wherein the recess (19) is aligned with the respective through-opening (15).

11. The oil scraper ring spring (1) according to any one of the preceding claims,
wherein an upper side of a bottom of the recess (19) forms an angle in a range of 3-30° with the radial plane.

12. The oil scraper ring spring according to any one of the preceding claims,
wherein a radial width of the nose section (13) is in a range of 0.2 to 1.2 mm; and/or
wherein a radial width of the abutment section (17) is in a range of 0.1 to 1.1 mm.

13. An oil scraper ring (3) for being mounted in an oil ring groove of a piston, comprising
an oil scraper ring spring (1) according to any one of the preceding claims, an upper metal ring (21) abutting on the abutment sections (17) of the upper regions of the oil scraper ring spring (1) and a radially inner surface thereof abutting radially outer surfaces of the nose sections (13) of the upper re - gions (5) of the oil scraper ring spring (1); and
a lower metal ring (23) abutting on the abutment sections (17) of the lower regions (7) of the oil scraper ring spring (1) and a radially inner surface thereof abutting radially outer surfaces of the nose sections (13) of the lower regions (7) of the oil scraper ring spring (1).

## Revendications

1. Ressort de segment racleur d'huile (1) pour un segment racleur d'huile (3), qui présente le ressort de segment racleur d'huile (1), un anneau métallique supérieur et inférieur (21, 22) et qui est prévu pour être monté dans une rainure annulaire de graissage d'un piston, présentant :
plusieurs zones supérieures (5) et plusieurs zones inférieures (7), qui sont agencées en alternance dans une direction périphérique de manière à ce qu'elles présentent un espacement en direction axiale ;
des zones de liaison (9), qui relient les zones supérieures et inférieures voisines (5, 7) ;
chacune des zones supérieures et inférieures (5, 7) présentant respectivement :
une section formant nez (13) qui est disposée à l'extrémité périphérique intérieure et qui est réalisée de manière à presser radialement vers l'extérieur l'anneau métallique supérieur ou inférieur (21, 22) respectivement adjacent, et qui présente une ouverture de passage (15) ;
une section d'appui (17) qui s'étend entre la section formant nez (13) et l'extrémité périphérique extérieure et qui est réalisée de manière à servir d'appui respectivement à l'anneau métallique supérieur (21) ou à l'anneau métallique inférieur (22) ;
la section d'appui (17) présentant un renfoncement (19) ;
**caractérisé en ce que**
la section d'appui (17) s'étend radialement entre la section formant nez (13) et l'extrémité périphérique extérieure ;
la profondeur du renfoncement (19), par rapport à la surface d'appui de la section d'appui (17), augmente en direction radiale vers l'ouverture de passage (15) ;
la largeur du renfoncement (19) dans la section d'appui (17) augmente en direction radiale vers l'ouverture de passage (15) ;
le renfoncement (19) dans la section d'appui (17) a sensiblement la forme d'un demi-entonnoir ;
le demi-entonnoir présente un angle d'ouverture de 30° à 150°, en particulier de 30° à 60°, ou dans lequel les bords latéraux supérieurs du renfoncement (19) ouvrent un segment angulaire de 5-50°, en particulier de 5-15° ; et
l'agrandissement de la profondeur et de la largeur du renfoncement (19) radialement vers l'intérieur, avec l'ouverture de passage (15), sert à agrandir et à accélérer le flux d'huile vers le milieu du piston.

2. Ressort de segment racleur d'huile (1) selon la revendication 1,
dans lequel l'extrémité radialement extérieure du renfoncement (19) dans la section d'appui (17) est disposée en une position de début de renfoncement (20) qui est espacée de l'extrémité périphérique extérieure, en particulier qui est espacée de l'extrémité périphérique extérieure de 20 à 30 % de la largeur du ressort de segment racleur d'huile (1), vu en direction radiale.

3. Ressort de segment racleur d'huile (1) selon la revendication 2,
dans lequel la partie de la section d'appui (17) entre la position de début de renfoncement (1) et l'extrémité périphérique extérieure se situe dans le plan radial de la section d'appui (17).

4. Ressort de segment racleur d'huile (1) selon l'une quelconque des revendications précédentes,
dans lequel l'extrémité radialement intérieure du renfoncement (19) présente une profondeur maximale de 0,05 mm par rapport au plan de la section d'appui (17).

5. Ressort de segment racleur d'huile (1) selon l'une quelconque des revendications précédentes,
dans lequel l'extrémité radialement extérieure du renfoncement (19) dans la section d'appui (17) est disposée en une position de début de renfoncement (20), dont la largeur correspond en particulier à la largeur de 10 à 20 % de la largeur de l'ouverture de passage (15).

6. Ressort de segment racleur d'huile (1) selon la revendication 5,
dans lequel la largeur du renfoncement (19) dans la section d'appui (17) en direction radiale augmente depuis la position de début de renfoncement (20) vers la position radiale de l'ouverture de passage (15), en particulier augmente de telle sorte que la largeur du renfoncement (19) à la position radiale de l'ouverture de passage (15) correspond à la largeur de l'ouverture de passage (15).

7. Ressort de segment racleur d'huile (1) selon l'une quelconque des revendications précédentes,
dans lequel la largeur de l'ouverture de passage (15) est de 0,1 à 0,7 mm.

8. Ressort de segment racleur d'huile (1) selon l'une quelconque des revendications précédentes,
dans lequel la coupe transversale de l'ouverture de passage (15) se situe sensiblement en direction axiale et/ou présente une surface de 0,1 à 0,5 mm².

9. Ressort de segment racleur d'huile (1) selon l'une quelconque des revendications précédentes,
dans lequel la hauteur de l'ouverture de passage (15), mesurée sensiblement en direction axiale depuis le dessous de la partie la plus haute de la section formant nez (13) jusqu'au dessus de la partie la plus basse du renfoncement (19) est de 0,1 à 0,9 mm.

10. Ressort de segment racleur d'huile (1) selon l'une quelconque des revendications précédentes,
dans lequel la direction d'extension du renfoncement (19) se situe en direction radiale ; et/ou
dans lequel le renfoncement (19) est aligné avec l'ouverture de passage correspondante (15).

11. Ressort de segment racleur d'huile (1) selon l'une quelconque des revendications précédentes,
dans lequel le dessus du fond du renfoncement (19) inclut un angle de 3-30° avec le plan radial.

12. Ressort de segment racleur d'huile selon l'une quelconque des revendications précédentes,
dans lequel la largeur radiale de la section formant nez (13) est de 0,2 à 1,2 mm ; et/ou
dans lequel la largeur radiale de la section d'appui (17) est de 0,1 à 1,1 mm.

13. Segment racleur d'huile (3) destiné à être monté dans une rainure annulaire de graissage d'un piston, présentant
un ressort de segment racleur d'huile (1) selon l'une quelconque des revendications précédentes,
un anneau métallique supérieur (21) qui repose sur les sections d'appui (17) des zones supérieures du ressort de segment racleur d'huile (1) et dont la surface intérieure radiale est apposée contre les surfaces extérieures radiales des sections formant nez (13) des zones supérieures (5) du ressort de segment racleur d'huile (1) ; et
un anneau métallique inférieur (23) qui est apposé contre les sections d'appui (17) des zones inférieures (7) du ressort de segment racleur d'huile (1) et dont la surface intérieure radiale est apposée contre la surface extérieure radiale des sections formant nez (13) des zones inférieures du ressort de segment racleur d'huile (1).
